# FASCICULE DE BREVET EUROPEEN

(11) **EP 3 230 057 B1**
(45) Date de publication et mention de la délivrance du brevet: **02.01.2019**
(21) Numéro de dépôt: 15801729.3
(22) Date de dépôt: 23.11.2015
(51) Int. Cl.: B32B 7/12, B32B 25/14, B32B 25/16, B60C 1/00, C09J 123/06, C09J 123/12, C08L 23/06, C08L 23/12

(54) **STRATIFIE ELASTOMERE COMPRENANT PLUS DE 3 COUCHES**
ELASTOMERLAMINAT MIT MEHR ALS DREI SCHICHTEN
ELASTOMERIC LAMINATE COMPRISING MORE THAN THREE LAYERS

(30) Priorité: 11.12.2014 FR 1462227
(43) Date de publication de la demande: 18.10.2017
(73) Titulaire: Compagnie Générale des Etablissements Michelin, 63000 Clermont-Ferrand (FR)
(72) Inventeur: ARAUJO DA SILVA, José-Carlos, F-63040 Clermont-Ferrand Cedex 9 (FR); DEPARIS, Xavier, F-63040 Clermont-Ferrand Cedex 9 (FR); FOGLIENI, Baptiste, F-63040 Clermont-Ferrand Cedex 9 (FR)
(74) Mandataire: Gandon-Pain, Sylvie
(86) Numéro de dépôt international: PCT/EP2015/077351
(87) Numéro de publication internationale: WO 2016/091571

(56) Documents cités:
- EP-A1- 1 880 871
- EP-B1- 1 940 617

## Description

La présente invention est celui des stratifiés élastomères comprenant plus de 3 couches de composition de caoutchouc diénique, destinés en particulier à être utilisés dans un pneumatique.

Un pneumatique comporte usuellement une bande de roulement, deux flancs, deux bourrelets, une armature de carcasse passant dans les deux flancs et ancrée aux deux bourrelets, et une armature de sommet disposée circonférentiellement entre la bande de roulement et l'armature de carcasse. La bande de roulement est destinée à entrer au contact de la surface de roulement du pneumatique. Le pneumatique peut comporter en outre une sous-couche à la bande de roulement, la sous-couche étant disposée circonférentiellement entre la bande de roulement et l'armature de carcasse, de préférence entre la bande de roulement et l'armature de sommet, la sous-couche à la bande roulement étant généralement adjacente à la bande de roulement.

Dans le pneumatique, la sous-couche à la bande de roulement doit adhérer à la bande de roulement de façon suffisante pour éviter que la sous-couche à la surface de la bande de roulement se désolidarise de la bande de roulement pendant toute la durée de vie du pneumatique. La sous-couche adhère généralement à la bande de roulement par l'intermédiaire de phénomènes physiques ou chimiques, comme les phénomènes d'interpénétration, d'enchevêtrement ou de réticulation des compositions de caoutchouc diénique constitutives respectivement de la bande de roulement et de la sous-couche à la bande de roulement. Dans les conditions adaptées de mise en oeuvre et de cuisson des compositions de caoutchouc diénique posées l'une contre l'autre, ces compositions sont solidement collées entres-elles et le complexe obtenu permet d'endurer les sollicitations liées au domaine d'application concerné, notamment celui du pneumatique.

Les compositions qui peuvent être utilisées en bande de roulement peuvent contenir une matrice élastomère qui est faiblement insaturée ou qui comprend un élastomère terpolymère d'éthylène, d'une α-oléfine et d'un diène non conjugué. Une matrice élastomère est considérée comme faiblement insaturée lorsqu'elle contient moins de 10% en masse d'unité diénique. Généralement, la composition de caoutchouc d'une sous-couche à la bande de roulement est généralement à base d'une matrice élastomère qui comprend du caoutchouc naturel considéré comme un élastomère fortement insaturé. Or le niveau d'adhésion entre d'une part une première composition à base d'une matrice élastomère qui est faiblement insaturée ou qui contient un élastomère terpolymère d'éthylène, d'une α-oléfine et d'un diène non conjugué, et d'autre part une seconde composition à base d'une matrice élastomère contenant un élastomère fortement insaturé peut être jugé insuffisant, notamment pour une application en pneumatique de la première composition en tant que bande de roulement du pneumatique et de la seconde composition en tant que sous couche à la bande de roulement.

Pour y remédier, on peut recourir à l'utilisation d'un matériau qui fera office de colle ou de gomme de liaison entre la première composition et la seconde composition, notamment utilisées respectivement en tant que bande de roulement d'un pneumatique et sous-couche à la bande de roulement. Dans ce cas-là, la sous couche à la bande de roulement n'est plus adjacente sur toute sa longueur à la bande de roulement, mais en est séparée par la gomme de liaison. Le document EP1940617 décrit un stratifié comportant une couche intermédiaire ayant une fonction adhésive.

Les Demanderesses ont résolu le problème en utilisant un stratifié qui fait office de gomme de liaison entre ces deux compositions. Utilisée entre les deux compositions constitutives chacune d'une couche à coller, il permet d'améliorer significativement la résistance à la séparation des couches, notamment par un meilleur collage de chacune des couches à coller.

Ainsi, un premier objet de l'invention est un stratifié élastomère comprenant une couche A, une couche B, n couches Ci disposées entre la couche A et la couche B, n étant un nombre entier supérieur ou égal à 2, i étant un nombre entier allant de 1 à n,
∘ la couche C1(i=1) étant disposée entre la couche A et la couche C2 (i=2),
∘ la couche Cn (i=n) étant disposée entre la couche B et la couche Cn-1,
∘ la couche Ci étant disposée entre la couche Ci-1 et la couche Ci+1 pour les valeurs de i allant de 2 à n-1 lorsque n est supérieur à 2,
dans lequel
la couche A consiste en une composition de caoutchouc diénique,
la couche B consiste en une composition de caoutchouc diénique comprenant un élastomère diénique B ayant un taux massique d'unité diénique supérieur à 50%,
les n couches Ci pour i allant de 1 à n consistent chacune en une composition de caoutchouc diénique,
la couche C1 comprend un élastomère diénique E comprenant des unités éthylène et des unités diéniques, les unités diéniques représentant plus de 10% en masse des unités monomère de l'élastomère diénique E,
la couche Cn comprend de 50 à moins de 100 pce d'un élastomère diénique N ayant un taux massique d'unité diénique supérieur à 50%,
le taux exprimé en pce d'élastomère diénique N étant plus élevé dans la couche Cn que dans la couche C1,
le taux exprimé en pce d'élastomère diénique E étant plus élevé dans la couche C1 que dans la couche Cn,
pour n supérieur à 2, les couches Ci comprennent un élastomère diénique I choisi dans le groupe constitué par les homopolymères et les copolymères de diène présentant plus de 10% en masse d'unité diénique, pour les valeurs de i allant de 2 à n-1.

Un autre objet de l'invention est l'utilisation du stratifié élastomère conforme à l'invention dans un pneumatique.

L'invention concerne aussi un pneumatique qui comporte le stratifié élastomère conforme à l'invention.

L'invention concerne aussi un stratifié adhésif qui consiste en les couches C1, Cn et Ci telles que définies dans le stratifié élastomère conforme à l'invention à la différence près que la couche C1 et la couche Cn présentent une seule interface avec une couche, respectivement avec la couche C2 et la couche Cn-1, pour i allant de 2 à n-1 avec n supérieur ou égal à 2.

L'invention porte également sur l'utilisation du stratifié adhésif conforme à l'invention pour coller deux couches A' et B' de composition identique respectivement aux couches A et B telles que définies dans le stratifié élastomère conforme à l'invention, en appliquant la couche C1 sur la couche A' et la couche Cn sur la couche B'.

### I. DESCRIPTION DETAILLEE DE L'INVENTION :

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par l'expression « partie en poids pour cent parties en poids d'élastomère » (ou pce), il faut entendre au sens de la présente invention, la part, en masse pour cent parties d'élastomère présent dans la composition de caoutchouc considérée et constitutive d'une couche.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

On entend par stratifié un produit fait de plusieurs couches de forme plane ou non plane, conformément à la définition donnée par la classification internationale des brevets.

Le stratifié élastomère conforme à l'invention comprend une couche A, une couche B, n couches Ci disposées entre la couche A et la couche B, n étant un nombre entier supérieur ou égal à 2, i étant un nombre entier allant de 1 à n,
∘ la couche C1 (i=1) étant disposée entre la couche A et la couche C2 (i=2),
∘ la couche Cn étant disposée entre la couche B et la couche Cn-1,
∘ la couche Ci étant disposée entre la couche Ci-1 et la couche Ci+1 pour les valeurs de i allant de 2 à n-1 lorsque n est supérieur à 2,
dans lequel
la couche A consiste en une composition de caoutchouc diénique,
la couche B consiste en une composition de caoutchouc diénique comprenant un élastomère diénique B ayant un taux massique d'unité diénique supérieur à 50%,
les n couches Ci pour i allant de 1 à n consistent chacune en une composition de caoutchouc diénique,
la couche C1 comprend un élastomère diénique E comprenant des unités éthylène et des unités diéniques, les unités diéniques représentant plus de 10% en masse des unités monomère de l'élastomère diénique E,
la couche Cn comprend de 50 à moins de 100 pce d'un élastomère diénique N ayant un taux massique d'unité diénique supérieur à 50%,
le taux exprimé en pce d'élastomère diénique N étant plus élevé dans la couche Cn que dans la couche C1,
le taux exprimé en pce d'élastomère diénique E étant plus élevé dans la couche C1 que dans la couche Cn,
pour n supérieur à 2, les couches Ci comprennent un élastomère diénique I choisi dans le groupe constitué par les homopolymères et les copolymères de diène présentant plus de 10% en masse d'unité diénique, pour les valeurs de i allant de 2 à n-1.

Le stratifié élastomère conforme à l'invention est dit élastomère car il comprend plusieurs couches qui consistent en des compositions de caoutchouc diénique, en l'espèce la couche A, la couche B et les n couches.

Les couches se différencient de leurs proches voisines par leur composition de caoutchouc diénique respective, de préférence par la nature de leur matrice élastomère. On entend par proches voisines de la couche Ci les couches Ci+1 et Ci-1 pour les valeurs de i allant de 2 à n-1, les proches voisines de la couche C1 étant la couche A et la couche C2, les proches voisines de la couches Cn étant la couche Cn-1 et la couche B.

Par élastomère (ou indistinctement "caoutchouc", les deux termes étant considérés comme synonymes) "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

On entend par élastomère diénique fortement insaturé un élastomère ayant un taux massique d'unité diénique supérieur à 50%.
On entend par élastomère diénique faiblement insaturé un élastomère ayant un taux massique d'unité diénique inférieur à 10%.
Le taux d'unité diénique qui se rapporte à un élastomère est exprimé en pourcent massique pour 100 g de l'élastomère. Il s'agit donc d'un taux massique. Par exemple un taux massique d'unité diénique de z% dans un élastomère A signifie que les unités diéniques représentent z g dans 100 g d'élastomère A, z étant un nombre de 0 à 100, par exemple égal à 5. Cette formulation est équivalente à celle qui consiste à dire que l'élastomère A contient z% d'unité diénique, ou que l'élastomère A présente z% d'unité diénique, ou encore que l'élastomère A a z% d'unité diénique.

On entend par unité diénique une unité monomère issue de l'insertion d'un motif monomère résultant de la polymérisation d'un monomère diène conjugué ou d'un monomère diène non conjugué, l'unité diénique comportant une double liaison carbone carbone.

On entend par matrice élastomère d'une composition de caoutchouc l'ensemble des élastomères contenus dans la composition de caoutchouc.
On entend par matrice élastomère fortement insaturée une matrice élastomère qui présente un taux massique d'unité diénique supérieur à 50%. Une matrice élastomère fortement insaturée contient typiquement un (ou plusieurs) élastomère diénique fortement insaturé ayant un taux massique d'unité diénique supérieur à 50%. A titre d'exemple, on peut citer les élastomères homopolymères et les copolymères de 1,3-diène, notamment butadiène ou isoprène.
On entend par matrice élastomère faiblement insaturée une matrice élastomère qui présente un taux massique d'unité diénique inférieur à 10%. Une matrice élastomère faiblement insaturée contient typiquement un (ou plusieurs) élastomère diénique faiblement insaturé ayant un taux d'unité diénique inférieur à 10%. La matrice élastomère faiblement insaturée peut néanmoins contenir un élastomère diénique fortement insaturé dans une proportion telle que le taux d'unités diéniques présente dans la matrice élastomère est inférieur à 10%.

Le taux d'unité diénique qui se rapporte à une matrice élastomère est exprimé en pourcent massique pour 100 g de la matrice élastomère. Il s'agit donc d'un taux massique. Par exemple un taux massique d'unité diénique de z'% dans une matrice élastomère B signifie que la totalité des unités diéniques présentes dans la matrice élastomère B représente z' g dans 100 g de matrice élastomère B, z' étant un nombre de 0 à 100, par exemple égal à 10. Cette formulation est équivalente à celle qui consiste à dire que la matrice élastomère B contient z'% d'unité diénique ou que la matrice élastomère B présente z'% d'unité diénique.

### Agencement des couches :

Le stratifié élastomère conforme à l'invention a pour caractéristique essentielle de comprendre une couche A, une couche B et n couches Ci disposées entre les couches A et B, n étant un nombre entier supérieur ou égal à 2, i étant un nombre entier allant 1 à n.

Lorsque le stratifié élastomère contient la couche A, la couche B et deux couches disposées toutes les deux entre la couche A et la couche B, la couche C1 (i=1) est disposée entre la couche A et la couche C2 (i=2), tandis que la couche C2 est disposée entre la couche C1 et la couche B. Cette variante correspond au cas où n est égal à 2.

Lorsque le stratifié élastomère conforme à l'invention contient la couche A, la couche B et plus de deux couches, notamment n couches (n étant alors supérieur à 2), entre la couche A et la couche B, chacune des couches, dénommée Ci, est disposée entre la couche Ci-1 et la couche Ci+1 pour les valeurs de i allant de 2 à n-1, sachant que la couche C1 présente une interface commune avec la couche A et que la couche Cn présente une interface commune avec la couche B. Cette variante correspond au cas où n est supérieur à 2.

La valeur de n n'est pas limitée par une valeur maximum d'un point de vue technique : il peut varier dans une large mesure. Néanmoins, l'homme du métier comprend qu'un nombre important de couches Ci peut ne pas être favorable pour certaines applications, par exemple en raison du coût matière et du poids qui augmentent avec le nombre de couches. C'est pourquoi, de préférence n est égal à 2.

### Composition des couches :

### La couche C1

Le stratifié élastomère a aussi pour caractéristique essentielle que la couche C1 comprend un élastomère diénique E comprenant des unités éthylène et des unités diéniques, les unités diéniques représentant plus de 10% en masse des unités monomère de l'élastomère diénique E.

Les élastomères comprenant des unités éthylène et des unités diéniques sont bien connus de l'homme du métier et peuvent être synthétisés par polymérisation en présence de catalyseurs Ziegler Natta ou de systèmes catalytiques comprenant des métallocènes. A titre d'élastomère diénique E, on peut citer les copolymères d'éthylène et de 1,3-diène, en particulier le butadiène ou l'isoprène, les terpolymères d'éthylène, d'a-oléfine et de diène non conjugué, notamment les EPDM (ethylene-propylene-diene rubber).

Il est entendu que l'élastomère diénique E peut être un mélange d'élastomères répondant à la définition de l'élastomère diénique E, notamment des mélanges de terpolymères d'éthylène, d'a-oléfine et de diène non conjugué qui se différencient des uns des autres par leur macrostructure ou leur microstructure, en particulier par le taux massique respectif des unités éthylène, α-oléfine et diène non conjugué

Selon une variante de l'invention, l'élastomère diénique E est un terpolymère d'éthylène, d'a-oléfine et de diène non conjugué, les unités diène non conjugué représentant plus de 10% en masse du deuxième élastomère.

Selon cette variante, l'élastomère diénique E présente de préférence au moins l'une des caractéristiques suivantes, de préférence toutes :
- les unités éthylène représentent entre 20 et 90%, préférentiellement entre 30 et 70% en masse de l'élastomère diénique E,
- les unités α-oléfine représentent entre 10 et 80%, préférentiellement de 15 à 70% en masse de l'élastomère diénique E.

Selon l'un quelconque des modes de réalisation de cette variante, l'élastomère diénique E contient préférentiellement entre 10 et 40%, plus préférentiellement entre 10 et 20% en masse d'unité diénique. Lorsque l'élastomère diénique E présente un tel taux d'unité diénique, il se distingue des terpolymères d'éthylène, d'a-oléfine et de diène non conjugué qui sont conventionnellement utilisés dans les compositions de caoutchouc pour pneumatique, notamment dans les flancs de pneumatique pour leur résistance au vieillissement et à l'ozone, et qui présentent généralement un taux d'unité diénique d'au plus 10%.

Selon un mode de réalisation particulier de l'invention, le taux d'élastomère diénique E est de 50 à 100pce, de préférence entre 50 et 100 pce dans la couche C1.

La couche C1 peut contenir aussi un autre élastomère diénique ayant de préférence un taux massique d'unité diénique supérieur à 50%, en particulier l'élastomère diénique N qui est aussi présent dans la couche Cn, auquel cas la quantité calculée en pce d'élastomère diénique N est plus faible dans la couche C1 que dans la couche Cn.

Selon l'invention, la teneur exprimée en pce d'élastomère diénique E dans la couche C1 est telle qu'elle est toujours supérieure à celle dans la couche Cn. Autrement dit la quantité calculée en pce d'élastomère diénique E est plus élevée dans la couche C1 que dans la couche Cn.

Selon un mode de réalisation particulièrement préférentiel de l'invention, la couche C1 contient plus de 90 pce d'un mélange d'élastomères consistant en l'élastomère diénique N et l'élastomère diénique E, de préférence 100 pce de ce mélange.

### La couche Cn

Le stratifié élastomère a aussi pour autre caractéristique essentielle que la couche Cn comprend de 50 à moins de 100 pce, de préférence de 50 à 90 pce d'élastomère diénique N ayant un taux massique d'unité diénique supérieur à 50%.

L'élastomère diénique N peut être un élastomère contenant des unités monomère diène conjugué, en particulier 1,3 diène contenant de préférence 4 à 12 atomes de carbone, avantageusement isoprène.

Il est entendu que l'élastomère diénique N peut être un mélange d'élastomères qui se différencient des uns des autres par leur macrostructure ou leur microstructure.

Selon un mode de réalisation préférentiel de l'invention, l'élastomère diénique N est un polyisoprène à fort taux de cis présentant un taux de liaison 1,4-cis supérieur à 90%, pourcentage calculé sur la base de la masse du polyisoprène.

Selon l'un quelconque des modes de réalisation de l'invention, l'élastomère diénique est de préférence le caoutchouc naturel.

Outre l'élastomère diénique N, la couche Cn contient un autre élastomère préférentiellement choisi dans le groupe des élastomères diéniques ayant un taux massique d'unité diénique supérieur à 10%. Cet autre élastomère diénique est de préférence l'élastomère diénique E, auquel cas la quantité d'élastomère diénique E calculée en pce est plus faible dans la couche Cn que dans la couche C1.

Selon un mode de réalisation particulièrement préférentiel de l'invention, la couche Cn contient plus de 90 pce d'un mélange d'élastomères consistant en l'élastomère diénique N et l'élastomère diénique E, de préférence 100 pce de ce mélange.

Lorsque 2 couches sont disposées entre les couches A et B, comme déjà mentionné précédemment (n=2), la couche C2 contient l'élastomère diénique N et peut contenir l'élastomère diénique E, tandis que la couche C1 contient l'élastomère diénique E et peut contenir l'élastomère diénique N.

### Les couches Ci pour les valeurs de i allant de 2 à n-1, n étant supérieur à 2 :

Lorsque le stratifié comprend plus de 2 couches entre les couches A et B (n étant supérieur à 2), les couches Ci comprennent, bien entendu chacune, un élastomère diénique I choisi dans le groupe constitué par les homopolymères et les copolymères de diène présentant plus de 10% en masse d'unité diénique, pour les valeurs de i allant de 2 à n-1. Lorsque n est égal à 3, les valeurs prises par i variant de 2 à n-1 se limitent bien entendu à la seule valeur 2.

L'élastomère diénique I est de préférence l'élastomère diénique E, l'élastomère diénique N ou leur mélange.

Lorsque l'élastomère diénique I est l'élastomère diénique E, le taux exprimé en pce d'élastomère diénique E est de préférence plus faible dans la couche Ci+1 que dans la couche Ci pour au moins une des valeurs de i allant de 2 à n-1. Autrement dit, la composition d'une au moins des couches Ci présente de préférence un taux d'élastomère diénique E plus faible que la composition de caoutchouc constitutive de la couche qui est considérée comme sa proche voisine et qui la précède dans le sens allant de la couche 1 à la couche n, pour les valeurs de i allant de 2 à n-1.

Selon un mode de réalisation particulièrement préférentiel de l'invention (n étant supérieur à 2), le taux exprimé en pce d'élastomère diénique E est plus faible dans la couche Ci+1 que dans la couche Ci pour toute valeur de i allant de 2 à n-1. Les couches étant empilées les unes sur les autres et compte tenu de leur concentration respective en élastomère diénique E, l'homme du métier comprend qu'il existe un gradient de taux d'élastomère diénique E dans le stratifié élastomère, ce taux décroissant dans le sens allant de la couche 1 vers la couche n, le taux d'élastomère diénique E étant exprimée en pce dans chacune des couches.

Selon un mode de réalisation de l'invention (n étant supérieur à 2), le taux exprimé en pce d'élastomère diénique N est plus faible dans la couche Ci que dans la couche Ci+1 pour au moins une des valeurs de i allant de 2 à n-1. Autrement dit, la composition d'une au moins des couches Ci présente de préférence un taux d'élastomère diénique E plus faible que la composition de caoutchouc constitutive de la couche qui est considérée comme sa proche voisine et qui la suit dans le sens allant de la couche 1 à la couche n, pour les valeurs de i allant de 2 à n-1.

Selon un autre mode de réalisation particulièrement préférentiel de l'invention (n étant supérieur à 2), le taux exprimé en pce d'élastomère diénique N est plus faible dans la couche Ci que dans la couche Ci+1 pour toute valeur de i allant de 2 à n-1. Les couches étant empilées les unes sur les autres et compte tenu de leur concentration respective en élastomère diénique N, l'homme du métier comprend qu'il existe un gradient de taux d'élastomère diénique N dans le stratifié élastomère, ce taux croissant dans le sens allant de la couche 1 vers la couche n, le taux d'élastomère diénique N étant exprimée en pce dans chacune des couches.

Un mode de réalisation davantage préférentiel de l'invention consiste à combiner les deux modes de réalisation particulièrement préférentiels décrits ci-dessus, ce qui conduit à décrire deux gradients de taux d'élastomère diénique dans le stratifié élastomère, l'un relatif au taux d'élastomère diénique E et l'autre relatif au taux d'élastomère diénique N allant respectivement en décroissant et en croissant dans le stratifié élastomère dans le sens allant de la couche 1 à la couche n.

Selon un mode de réalisation particulièrement préférentiel de l'invention, l'une quelconque des couches Ci, de préférence toutes, pour i allant de 2 à n-1 (n étant supérieur à 2), contient plus de 90 pce d'un mélange d'élastomères consistant en l'élastomère N et l'élastomère E, de préférence 100 pce de ce mélange.

### La couche B

Le stratifié élastomère conforme à l'invention a pour caractéristique essentielle de comprendre une couche B, laquelle couche B consiste en une composition de caoutchouc diénique comprenant un élastomère diénique B ayant un taux massique d'unité diénique supérieur à 50%.

Il est entendu que l'élastomère diénique B peut être un mélange d'élastomères qui se différencient des uns des autres par leur macrostructure ou leur microstructure.

L'élastomère diénique B peut être un élastomère contenant des unités monomère diène conjugué, en particulier 1,3 diène contenant 4 à 12 atomes de carbone, avantageusement isoprène.

Selon un mode de réalisation préférentiel de l'invention, l'élastomère diénique B est un polyisoprène à fort taux de cis présentant un taux de liaison 1,4-cis supérieur à 90%, de préférence un caoutchouc naturel.

Selon l'un quelconque des modes de réalisation de l'invention, la composition de caoutchouc diénique de la couche B contient préférentiellement au moins 95 pce, plus préférentiellement 100 pce d'élastomère diénique B.

### La couche A

Le stratifié élastomère conforme à l'invention a pour caractéristique essentielle de comprendre une couche A, laquelle couche A consiste en une composition de caoutchouc diénique.

Selon l'un quelconque des modes de réalisation de l'invention, la couche A comprend de préférence un élastomère diénique A terpolymère d'éthylène, d'une α-oléfine et d'un diène non conjugué ayant un taux d'unité diénique inférieur à 10% en masse.

Selon un mode de réalisation particulier de l'invention, l'élastomère diénique A présente au moins l'une des caractéristiques suivantes, de préférence toutes :
- les unités éthylène représentent entre 20 et 90%, préférentiellement entre 30 et 70% en masse de l'élastomère diénique A,
- les unités α-oléfine représentent entre 10 et 80%, préférentiellement de 15 à 70% en masse de l'élastomère diénique A,
- les unités diène non conjugué représentent entre 0.5 et 10% en masse de l'élastomère diénique A.

Le taux d'élastomère diénique A dans la couche A est de préférence d'au moins 95 pce, de manière plus préférentielle égal à 100 pce. Ces plages de valeurs préférentielles peuvent s'appliquer à l'un quelconque des modes de réalisation de l'invention.

Selon un mode de réalisation de l'invention, la matrice élastomère qui peut être composée en partie ou en totalité de l'élastomère diénique A et contenue dans la couche A présente elle-même un taux massique d'unité diénique inférieur à 10%. Cette caractéristique sous-entend que la matrice élastomère est relativement pauvre en élastomère fortement insaturé et relativement riche en élastomère faiblement insaturé.

L'a-oléfine dont les unités monomères constituent l'élastomère diénique E ou l'élastomère diénique A peut être un mélange d'alpha oléfines. L'a-oléfine comprend généralement 3 à 16 atomes de carbone. Conviennent comme α-oléfine par exemple le propylène, le 1-butène, le 1-pentène, le 1-hexène, le 1-octène et le 1-dodécène. Avantageusement, l'a-oléfine est le propylène, auquel cas le terpolymère est appelé communément un EPDM (en anglais « EPDM rubber »).

Le diène non conjugué dont les unités monomères constituent l'élastomère diénique E ou l'élastomère diénique A comprend généralement 6 à 12 atomes de carbone. A titre de diène non conjugué, on peut citer le dicyclopentadiène, le 1,4-hexadiène, le 5-éthylidène-2-norbornène, le 5-méthylène-2-norbornène, le 1,5-cyclooctadiène. Avantageusement, le diène non conjugué est le 5-éthylidène-2-norbornène.

Selon l'un quelconque des modes de réalisation de l'invention, l'élastomère diénique E ou l'élastomère diénique A est de préférence un EPDM, de manière plus préférentielle un terpolymère d'éthylène, de propylène et de 5-éthylidène-2-norbornène.

Selon l'un quelconque des modes de réalisation de cette variante, l'élastomère diénique E et l'élastomère diénique A sont de préférence un EPDM, de manière plus préférentielle un terpolymère d'éthylène, de propylène et de 5-éthylidène-2-norbornène.

La microstructure des élastomères est déterminée par analyse RMN ¹H, supplée par l'analyse RMN ¹³C lorsque la résolution des spectres RMN du ¹H ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone.

Pour les mesures sur des mélanges ou des élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.

Pour les mesures sur des élastomères solubles, est utilisée une sonde RMN liquide permettant d'observer le proton et le carbone en mode découplé du proton.

La préparation des échantillons non solubles est fait dans des rotors remplis avec le matériau analysé et un solvant deutéré permettant le gonflement, en général du chloroforme deutéré (CDCl₃). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante.

Les échantillons solubles sont mis en solution dans un solvant deutéré (environ 25mg d'élastomère dans 1mL), en général du chloroforme deutéré (CDCl₃). Le solvant ou coupage de solvant utilisé doit toujours être deutéré et sa nature chimique peut être adaptée par l'homme du métier.

Dans les deux cas (échantillon soluble ou échantillon gonflé):
Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.
Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.
Les mesures sont réalisées à 25°C.

### Charge renforçante :

La composition de caoutchouc diénique constitutive de l'une quelconque des couches A, B et Ci, de préférence toutes, comprend de préférence une charge renforçante, en particulier lorsque le stratifié élastomère est utilisé dans un pneumatique, i allant de 1 à n avec n supérieur ou égal à 2.

La charge renforçante peut être tout type de charge dite renforçante, connue pour ses capacités à renforcer une composition de caoutchouc diénique utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc diénique destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

Dans le présent exposé, la surface spécifique BET est déterminée de manière connue par adsorption de gaz à l'aide de la méthode de Brunauer-Emmett-Teller décrite dans *"*The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Pour coupler la charge inorganique renforçante à l'élastomère diénique, on utilise de manière bien connue un agent de couplage, notamment un silane, (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (V)

Z-A-Sₓ-A-Z (V)

dans laquelle :
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 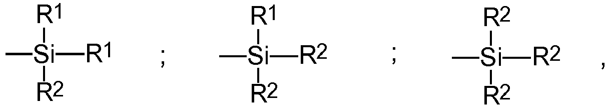 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevets WO 02/30939 (ou US 6,774,255), WO 02/31041 (ou US 2004/051210) ou encore des silanes ou POSS porteurs de groupements fonctionnels azo-dicarbonyle, tels que décrits par exemple dans les demandes de brevets WO 2006/125532, WO 2006/125533, WO 2006/125534.

A titre d'agent de couplage, on peut également citer les alkoxysilanes portant un groupe carboné insaturé susceptible de réagir par voie radicalaire avec une unité diénique de la matrice élastomère. A titre d'exemple on peut citer le 3-butène-triéthoxysilane, le 3-méthacryloxypropyltriméthoxysilane.

La teneur en agent de couplage est avantageusement inférieure à 20 pce (parties en masse pour cent parties d'élastomère présent dans la composition de caoutchouc considérée et constitutive d'une couche), étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition de caoutchouc diénique.

Selon un mode de réalisation particulier de l'invention, chacune des compositions de caoutchouc diénique constitutives respectivement des couches A, B et des n couches du stratifié élastomère comprend une charge renforçante.

### Taux de charge renforçante :

Le taux de charge renforçante dans chacune des compositions de caoutchouc diénique du stratifié élastomère peut varier dans une large mesure, par exemple selon la nature de la matrice élastomère ou de la charge renforçante dans la composition de caoutchouc diénique ou selon la quantité de plastifiant dans la composition de caoutchouc diénique. Ces variables sont ajustées par l'homme du métier en fonction de l'usage qu'il est fait du stratifié, notamment dans un pneumatique.

Dans le cas d'un usage du stratifié dans lequel la couche A du stratifié est constitutive d'une bande de roulement destinée à équiper un pneumatique et la couche B est constitutive d'une sous couche à la bande de roulement, la nature de la charge renforçante dans la composition de caoutchouc diénique des n couches ainsi que son taux sont choisis par l'homme du métier en adéquation avec les conditions particulières de cet usage. Par exemple la charge renforçante peut être un noir de carbone, une silice ou leur mélange, son taux dans la composition de caoutchouc diénique pouvant varier de 20 à 200 pce.

Selon l'un quelconque des modes de réalisations de l'invention, le taux de charge renforçante dans la composition de caoutchouc diénique des n couches varie de préférence de 5 à 80 pce, de manière plus préférentielle de 5 à 50 pce.

Selon un mode de réalisation particulier de l'invention, la composition de caoutchouc diénique des n couches comprend un taux de charge renforçante inférieur ou égal au taux de charge renforçante de la composition de caoutchouc diénique de la couche A.

### Autres additifs :

La composition de caoutchouc diénique constitutive de l'une quelconque des couches A, B et n couches du stratifié élastomère peut également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité de la composition de caoutchouc diénique, d'améliorer sa faculté de mise en oeuvre à l'état cru.

Elle peut comporter également tout ou partie des additifs usuels habituellement utilisés dans les compositions d'élastomères destinées à constituer des mélanges d'articles finis en caoutchouc tels que des pneumatiques, comme par exemple des pigments, des agents de protection tels que cires anti-ozone, anti-ozonants chimiques, anti-oxydants, des agents anti-fatigue, un système de réticulation, des accélérateurs ou retardateurs de vulcanisation, des activateurs de vulcanisation. Lorsque la matrice élastomère contient un terpolymère d'éthylène, d'a-oléfine et de diène non conjugué, en particulier un EPDM, on peut utiliser des coagents de réticulation conventionnellement utilisés dans la réticulation des EPDM. Comme coagent de réticulation, on peut citer le triallyl isocyanurate, l'éthylène diméthacrylate, le triméthylolpropane triméthacrylate. Le système de réticulation est de préférence à base de soufre, mais il peut être également à base de donneur de soufre, de peroxyde, de bismaléimide ou de leurs mélanges.

De préférence, les compositions de caoutchouc diénique constitutives respectivement des couches A, B et n couches comprennent un système de réticulation, de préférence un système de vulcanisation.

Les compositions de caoutchouc diénique utiles aux besoins de l'invention peuvent aussi comporter des plastifiants, par exemple des huiles d'extension, de nature aromatique ou non-aromatique, notamment des huiles très faiblement ou non aromatiques (e.g., huiles paraffiniques, naphténiques hydrogénées, huiles MES ou TDAE), des huiles végétales, en particulier les esters de glycérol comme les trioléates de glycérol, des résines plastifiantes hydrocarbonées présentant une haute Tg, de préférence supérieure à 30°C, telles que décrites par exemple dans les demandes WO 2005/087859, WO 2006/061064 et WO 2007/017060. La teneur en plastifiant est ajustée par l'homme du métier en fonction de la viscosité et des propriétés recherchées de la composition de caoutchouc diénique qui sont déterminées par l'usage qu'il sera fait de la composition de caoutchouc diénique. La viscosité de la composition de caoutchouc diénique elle-même dépend de nombreuses variables, comme la viscosité de la matrice élastomère, du taux de charge renforçante, des interactions qui peuvent exister entre la matrice élastomère et la charge renforçante. Donc l'homme du métier avec ses connaissances générales choisit le taux de plastifiant adéquat en tenant compte de ces différentes variables.

Si les compositions de caoutchouc diénique constitutives des n couches utiles au besoin de l'invention contiennent un plastifiant, elles en contiennent de préférence au plus 20 pce, de manière plus préférentielle moins de 10 pce, de manière encore plus préférentielle moins de 5 pce. Ces modes de réalisation préférentiels permettent d'atteindre des niveaux d'adhésion entre les couches très remarquables.

Selon un autre mode de réalisation de l'invention, la composition de caoutchouc diénique de l'une quelconque des n couches, de préférence toutes, est dépourvue de plastifiant. Ce mode de réalisation avantageux du point de vue de la performance d'adhésion est particulièrement adapté pour les compositions de caoutchouc diéniques constitutives des n couches qui sont faiblement chargées, notamment celles qui comprennent au plus 50 pce de charge renforçante.

### Préparation des compositions de caoutchouc diéniques :

Les compositions de caoutchouc diéniques utiles aux besoins de l'invention sont fabriquées dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

### Préparation du stratifié :

Dans la fabrication du stratifié élastomère conforme à l'invention, les compositions de caoutchouc diénique constitutives des couches sont apposées à l'état cru, les unes sur les autres. Pour faciliter l'adhésion interfaciale, les couches sont appliquées de préférence à chaud, les couches étant à l'état cru. L'application à chaud des couches à l'état cru est réalisée à une température qui est compatible avec la nature chimique des couches, c'est-à-dire à une température qui ne provoque pas par exemple de façon prématurée la réticulation des couches. Typiquement, une température supérieure à l'ambiante (20°C) et n'excédant pas 80°C est tout à fait appropriée.

On comprendra aisément que, selon les domaines d'application spécifiques, le stratifié élastomère conforme à l'invention peut comporter plusieurs gammes préférentielles d'épaisseur. Ainsi, par exemple, pour des bandages pneumatiques de type tourisme, les couches A et B peuvent avoir une épaisseur d'au moins 2 mm, préférentiellement comprise entre 3 et 10 mm. Selon un autre exemple, pour des bandages pneumatiques de véhicules poids lourds ou agricole, l'épaisseur préférentielle peut se situer entre 2 et 20 mm pour les couches A et B. Selon un autre exemple, pour des bandages pneumatiques de véhicules dans le domaine du génie civil ou pour avions, l'épaisseur préférentielle des couches A et B peut se situer entre 2 et 100 mm.

Selon les conditions particulières d'usage du stratifié élastomère, les n couches peuvent présenter chacune une épaisseur allant de 60 µm à quelques millimètres, par exemple de 100 µm à 5 mm.

Pour les épaisseurs les plus faibles, en particulier de l'ordre de quelques centaines de µm, les couches sont de préférence formées par application de la composition de caoutchouc diénique sous forme d'une dissolution composée d'un volume de solvant. Pour des épaisseurs supérieures, on préfère calandrer, voire extruder la composition de caoutchouc diénique sous forme de couche.

Pour fabriquer le stratifié élastomère, les couches peuvent être disposées l'une sur l'autre par application successive des couches, par exemple sur un tambour de confection classiquement utilisé dans la fabrication de bandage (ou enveloppe) de pneumatique. Par exemple la couche A est déposée sur le tambour, la couche C1 sur la couche A et ainsi de suite, jusqu'à l'application de la couche B sur la couche Cn.

Le stratifié élastomère peut être soit à l'état cru (avant réticulation ou vulcanisation), soit à l'état cuit (après réticulation ou vulcanisation).

Dans la fabrication d'un pneumatique contenant le stratifié élastomère, le stratifié élastomère peut être fabriqué préalablement à la fabrication du pneumatique ou au cours de la fabrication du pneumatique. Dans le premier cas, le stratifié élastomère au préalable formé peut être appliqué au pneumatique en le déposant par exemple sur l'armature de carcasse ou de sommet du pneumatique. Dans le second cas, la couche B peut être déposée par exemple sur l'armature de carcasse ou de sommet du pneumatique, puis la couche Cn sur la couche B et ainsi de suite jusqu'à l'application de couche A sur la couche C1.

Le stratifié élastomère peut être utilisé dans un pneumatique, le pneumatique comprenant une bande de roulement, deux flancs, deux bourrelets, une armature de carcasse passant dans les deux flancs et ancrée aux deux bourrelets, et une armature de sommet disposée circonférentiellement entre la bande de roulement et l'armature de carcasse.

Selon un mode de réalisation de l'invention, le stratifié élastomère est utilisé dans un pneumatique de façon à ce que la couche A constitue une partie ou la totalité de la bande de roulement du pneumatique et la couche B une partie ou la totalité d'une sous couche à la bande de roulement.

Selon un mode de réalisation préférentiel de l'invention dans lequel le stratifié élastomère est utilisé dans un pneumatique, la couche A constitue la totalité de la bande de roulement et la couche B la totalité d'une sous couche à la bande de roulement.

Lorsque la couche B dans le stratifié élastomère est utilisée comme sous couche à la bande de roulement d'un pneumatique, de préférence elle n'est pas destinée à entrer en contact avec la surface de roulement du pneumatique.

Le pneumatique qui est pourvu du stratifié élastomère et qui représente un autre objet de l'invention, peut être à l'état cuit ou à l'état cru.

L'autre objet, le stratifié adhésif, consiste en les couches C1, Cn et Ci telles que définies dans le stratifié élastomère conforme à l'invention à la différence près que la couche C1 et la couche Cn présentent une seule interface avec une couche, respectivement avec la couche C2 et la couche Cn-1, pour i allant de 2 à n-1 avec n supérieur ou égal à 2. Il peut être utilisé comme une gomme de liaison pour coller deux couches A' et B' respectivement de compositions identiques aux couches A et B et former ainsi avec les couches A' et B' le stratifié élastomère conforme à l'invention. Le stratifié adhésif à l'état cru est disposé entre les couches A' et B' également à l'état cru pour former le stratifié élastomère conforme à l'invention, en appliquant la couche C1 sur la couche A' et la couche Cn sur la couche B'.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Préparation des compositions de caoutchouc diénique et des stratifiés :

Pour les compositions dont la formulation figure dans le tableau I, on procède de la manière suivante :
On introduit dans un mélangeur interne (taux de remplissage final : environ 70% en volume), dont la température initiale de cuve est d'environ 80°C, successivement l'élastomère, la charge renforçante, ainsi que les divers autres ingrédients a l'exception du système de vulcanisation. On conduit alors un travail thermomécanique (phase non-productive) en une étape, qui dure au total environ 3 à 4 min, jusqu'à atteindre une température maximale de « tombée » de 165°C. On récupère le mélange ainsi obtenu, on le refroidit puis on incorpore du soufre et un accélérateur type sulfénamide sur un mélangeur (homo-finisseur) à 30 °C, en mélangeant le tout (phase productive) pendant un temps approprié (par exemple une dizaine de minutes).

Les compositions ainsi obtenues sont ensuite calandrées soit sous la forme de plaque (épaisseur 2 à 3mm) ou de couche pour la mesure de leurs niveaux d'adhésion respectifs.

Les compositions A, B, C1 et C2 diffèrent par la nature de la matrice élastomère qui les compose respectivement et sont constitutives respectivement des couches A, B, C1 et C2. La couche C1 est disposée entre la couche A et C2 ; la couche C2 entre la couche C1 et la couche B.
La couche A comprend un élastomère EPDM faiblement insaturé à 5% en masse d'unité diénique ; la couche B comprend un élastomère ayant plus de 50% en masse d'unité diénique, le caoutchouc naturel.
La matrice élastomère de la couche C1 et celle de la couche C2 comprennent respectivement un élastomère EPDM à 14% en masse d'unité diénique et le caoutchouc naturel, élastomère ayant plus de 50% en masse d'unité diénique, sachant que le taux de l'élastomère EPDM à 14% en masse d'unité diénique est plus élevé dans la couche C1 que dans la couche C2 et que le taux de caoutchouc naturel est plus élevé dans la couche C2 que dans la couche C1, les taux des élastomères étant exprimés en pce.

### II.2-Mesures et tests utilisés :

La mesure d'adhésion est réalisée par un test dit de pelage en T ou aussi appelé pelage à 180°. Les éprouvettes de pelage sont réalisées par mise en contact des deux couches (les compositions constitutives des couches étant à l'état cru) dont l'adhésion doit être testée. Une amorce de rupture est insérée entre les deux couches. Chacune des couches est renforcée par une nappe composite qui limite la déformation des dites couches sous traction.

L'éprouvette une fois assemblé est porté à 150°C sous une pression de 16 bars pendant 30 minutes. Des bandes de 30 mm de largeur sont ensuite découpées au massicot. Les deux côtés de l'amorce de rupture ont été ensuite placées dans les mors d'une machine de traction de marque «Instron». Les essais sont réalisés à 20°C et à une vitesse de traction de 100 mm/min. On enregistre les efforts de traction et on norme ceux-ci par la largeur de l'éprouvette. On obtient une courbe de force par unité de largeur (en N/mm) en fonction du déplacement de traverse mobile de la machine de traction (entre 0 et 200 mm). La valeur d'adhésion retenue correspond à la propagation de la rupture au sein de l'éprouvette et donc à la valeur stabilisée moyenne de la courbe. Les valeurs d'adhésion des exemples sont normées par rapport à un témoin (base 100).

L'adhésion est mesurée entre les deux couches A et B, entre les deux couches C1 et C2, entre les deux couches A et C1 et entre les deux couches B et C2. La valeur de la mesure d'adhésion entre les deux couches A et B est retenue comme la valeur témoin, puisque un stratifié comportant les deux couches A et B, la couche A étant disposée sur la couche B, n'est pas conforme à l'invention.

Le tableau 2 présente les résultats obtenus après tests de pelage à température ambiante. Les résultats sont exprimés en indice de performance. Un indice supérieur à 100 indique une plus forte amélioration de l'adhésion.

On constate que les indices de performance d'adhésion entre la couche B et la couche C2, entre la couche A et la couche C1 et entre la couche C1 et la couche C2 sont les plus élevés (respectivement 475, 570 et 500) par rapport au témoin. La présence des couches C1 et C2 dans un stratifié comprenant les couches A et B, les couches C1 et C2 étant disposées entre la couche A et la couche C2 et entre la couche C1 et la couche B du stratifié permet d'augmenter très fortement la résistance du stratifié à la séparation des couches qui le constituent, comparativement au stratifié témoin comportant uniquement les couches A et B.

**Tableau 1**

| | **A** | **B** | **C1** | **C2** |
|---|---|---|---|---|
| NR (1) | - | 100 | 10 | 70 |
| EPDM (2) | 100 | - | - | - |
| EPDM (3) | - | - | 90 | 30 |
| Noir de carbone (4) | 30 | 30 | 30 | 30 |
| Antioxydant (5) | 1,5 | 1,5 | 1,5 | 1,5 |
| Acide stéarique (6) | 2,5 | 2,5 | 2,5 | 2,5 |
| Oxyde de Zinc (7) | 3 | 3 | 3 | 3 |
| Accélérateur (8) | 2,0 | 2,0 | 2,0 | 2,0 |
| Soufre | 1,0 | 1,0 | 1,0 | 1,0 |

| | | | | |
|---|---|---|---|---|
| (1) Caoutchouc naturel (2) EPDM Nordel IP 4570 de la Société Dow (3) EPDM 9090M de la Société Mitsui (4) Noir de carbone de grade N234 selon la norme ASTM D-1765 (5) N-1,3-diméthylbutyl-N-phénylparaphénylènediamine «Santoflex 6-PPD» de la société Flexsys (6) Stéarine « Pristerene 4931 » de la société Uniqema (7) Oxyde de zinc de grade industriel de la société Umicore (8) N-cyclohexyl-2-benzothiazyle sulfénamide « Santocure CBS » de la société Flexsys | | | | |

**Tableau 2**

| Interface entre couches testée | A/B | B/C2 | A/C1 | C1/C2 |
|---|---|---|---|---|
| Niveau d'adhésion | 100 | 475 | 570 | 500 |

## Revendications

1. Stratifié élastomère comprenant une couche A, une couche B, n couches Ci disposées entre la couche A et la couche B, n étant un nombre entier supérieur ou égal à 2, i étant un nombre entier allant de 1 à n,
∘ la couche C1 étant disposée entre la couche A et la couche C2,
∘ la couche Cn étant disposée entre la couche B et la couche Cn-1,
∘ la couche Ci étant disposée entre la couche Ci-1 et la couche Ci+1 pour les valeurs de i allant de 2 à n-1 lorsque n est supérieur à 2,
dans lequel
la couche A consiste en une composition de caoutchouc diénique,
la couche B consiste en une composition de caoutchouc diénique comprenant un élastomère diénique B ayant un taux massique d'unité diénique supérieur à 50%,
les n couches Ci pour i allant de 1 à n consistent chacune en une composition de caoutchouc diénique,
la couche C1 comprend un élastomère diénique E comprenant des unités éthylène et des unités diéniques, les unités diéniques représentant plus de 10% en masse des unités monomère de l'élastomère diénique E,
la couche Cn comprend de 50 à moins de 100 pce d'un élastomère diénique N ayant un taux massique d'unité diénique supérieur à 50%,
le taux exprimé en pce d'élastomère diénique N étant plus élevé dans la couche Cn que dans la couche C1,
le taux exprimé en pce d'élastomère diénique E étant plus élevé dans la couche C1 que dans la couche Cn,
pour n supérieur à 2, les couches Ci comprennent un élastomère diénique I choisi dans le groupe constitué par les homopolymères et les copolymères de diène présentant plus de 10% en masse d'unité diénique, pour les valeurs de i allant de 2 à n-1.

2. Stratifié élastomère selon la revendication 1 dans lequel
l'élastomère diénique N est un polyisoprène à fort taux de cis présentant un taux de liaison 1,4-cis supérieur à 90%, de préférence un caoutchouc naturel.

3. Stratifié élastomère selon l'une quelconque des revendications 1 à 2 dans lequel
l'élastomère diénique I est l'élastomère diénique E, l'élastomère diénique N ou leur mélange.

4. Stratifié élastomère selon la revendication 3 dans lequel
le taux exprimé en pce d'élastomère diénique E est plus faible dans la couche Ci+1 que dans la couche Ci pour au moins une des valeurs de i allant de 2 à n-1, avec n supérieur à 2.

5. Stratifié élastomère selon l'une quelconque des revendications 3 à 4 dans lequel le taux exprimé en pce d'élastomère diénique E est plus faible dans la couche Ci+1 que dans la couche Ci pour toute valeur de i allant de 2 à n-1, avec n supérieur à 2.

6. Stratifié élastomère selon l'une quelconque des revendications 3 à 5 dans lequel le taux exprimé en pce d'élastomère diénique N est plus faible dans la couche Ci que dans la couche Ci+1 pour au moins une des valeurs de i allant de 2 à n-1, avec n supérieur à 2.

7. Stratifié élastomère selon l'une quelconque des revendications 3 à 6 dans lequel le taux exprimé en pce d'élastomère diénique N est plus faible dans la couche Ci que dans la couche Ci+1 pour toute valeur de i allant de 2 à n-1, avec n supérieur à 2.

8. Stratifié élastomère selon l'une quelconque des revendications 1 à 7 dans lequel l'une quelconque des couches Ci, de préférence toutes, contient plus de 90 pce d'un mélange d'élastomères consistant en l'élastomère N et l'élastomère E, de préférence 100 pce de ce mélange, pour i allant de 2 à n-1, avec n supérieur à 2.

9. Stratifié élastomère selon l'une quelconque des revendications 1 à 8 dans lequel la couche Cn comprend un autre élastomère préférentiellement choisi dans le groupe des élastomères diéniques ayant un taux massique d'unité diénique supérieur à 10%, de préférence l'élastomère diénique E.

10. Stratifié élastomère selon l'une quelconque des revendications 1 à 9 dans lequel la couche Cn contient plus de 90 pce d'un mélange d'élastomères consistant en l'élastomère diénique N et l'élastomère diénique E, de préférence 100 pce de ce mélange.

11. Stratifié élastomère selon l'une quelconque des revendications 1 à 10 dans lequel la couche C1 comprend un autre élastomère diénique ayant de préférence un taux massique d'unité diénique supérieur à 50%, de préférence l'élastomère diénique N.

12. Stratifié élastomère selon l'une quelconque des revendications 1 à 11 dans lequel le taux d'élastomère diénique E est de 50 à 100 pce, de préférence entre 50 et 100 pce dans la couche C1.

13. Stratifié élastomère selon l'une quelconque des revendications 1 à 12 dans lequel la couche C1 contient plus de 90 pce d'un mélange d'élastomères consistant en l'élastomère diénique N et l'élastomère diénique E, de préférence 100 pce de ce mélange.

14. Stratifié élastomère selon l'une quelconque des revendications 1 à 13 dans lequel le taux exprimé en pce d'élastomère diénique N est de 50 à 90 pce dans la couche Cn.

15. Stratifié élastomère selon l'une quelconque des revendications 1 à 14 dans lequel l'élastomère diénique E contient entre 10 et 40%, de préférence entre 10 et 20% en masse d'unité diénique.

16. Stratifié élastomère selon l'une quelconque des revendications 1 à 15 dans lequel l'élastomère diénique E est un terpolymère d'éthylène, d'une α-oléfine et d'un diène non conjugué, de préférence un EPDM.

17. Stratifié élastomère selon l'une quelconque des revendications 1 à 16 dans lequel le taux d'élastomère diénique B dans la composition de caoutchouc diénique de la couche B est d'au moins 95 pce, de préférence égal à 100 pce.

18. Stratifié élastomère selon l'une quelconque des revendications 1 à 17 dans lequel l'élastomère diénique B est un polyisoprène à fort taux de cis présentant un taux de liaison 1,4-cis supérieur à 90%, de préférence un caoutchouc naturel.

19. Stratifié élastomère selon l'une quelconque des revendications 1 à 18 dans lequel la couche A comprend un élastomère diénique A terpolymère d'éthylène, d'une α-oléfine et d'un diène non conjugué ayant un taux d'unité diénique inférieur à 10% en masse, de préférence un EPDM.

20. Stratifié élastomère selon l'une quelconque des revendications 1 à 19 dans lequel la couche A contient une matrice élastomère A présentant un taux massique d'unité diénique inférieur à 10%.

21. Stratifié élastomère selon l'une quelconque des revendications 1 à 20 dans lequel le taux d'élastomère diénique A dans la couche A est d'au moins 95 pce, de manière préférentielle égal à 100 pce.

22. Stratifié élastomère selon l'une quelconque des revendications 1 à 21 dans lequel l'une quelconque des couches A, B et Ci, de préférence toutes, comprend une charge renforçante, de préférence un noir de carbone, i variant de 1 à n.

23. Stratifié élastomère selon l'une quelconque des revendications 1 à 22 dans lequel l'une quelconque des couches A, B et Ci, de préférence toutes, comprend un système de réticulation, de préférence un système de vulcanisation, i variant de 1 à n.

24. Stratifié élastomère selon l'une quelconque des revendications 1 à 23 dans lequel chacune des n couches contient au plus 20 pce d'un plastifiant, de préférence moins de 10 pce.

25. Stratifié élastomère selon l'une quelconque des revendications 1 à 24 dans lequel l'une quelconque des n couches, de préférence toutes, est dépourvue de plastifiant.

26. Stratifié élastomère selon l'une quelconque des revendications 1 à 3 ou 9 à 25 dans lequel n est égal à 2.

27. Utilisation dans un pneumatique d'un stratifié élastomère défini selon l'une quelconque des revendications 1 à 26.

28. Pneumatique comportant une bande de roulement, deux flancs, deux bourrelets, une armature de carcasse passant dans les deux flancs et ancrée aux deux bourrelets, et une armature de sommet disposée circonférentiellement entre la bande de roulement et l'armature de carcasse, lequel pneumatique comprend un stratifié élastomère selon l'une quelconque des revendications 1 à 26.

29. Pneumatique selon la revendication 28 dans lequel la couche A du stratifié élastomère constitue une partie ou la totalité de la bande de roulement du pneumatique et la couche B du stratifié élastomère constitue une partie ou la totalité d'une sous-couche à la bande de roulement.

30. Stratifié adhésif qui consiste en les couches C1, Cn et Ci telles que définies dans les revendications 1 à 26 à la différence près que la couche C1 et la couche Cn présentent une seule interface avec une couche, respectivement avec la couche C2 et la couche Cn-1, pour i allant de 2 à n-1 avec n supérieur ou égal à 2.

31. Utilisation d'un stratifié adhésif défini selon la revendication 30 pour coller deux couches A' et B' de composition identique respectivement aux couches A et B définies selon l'une quelconque des revendications 1 à 26, en appliquant la couche C1 sur la couche A' et la couche Cn sur la couche B'.

## Patentansprüche

1. Elastomerlaminat, umfassend eine Schicht A, eine Schicht B, n Schichten Ci, die zwischen der Schicht A und der Schicht B angeordnet sind, wobei n eine ganze Zahl ist, die größer oder gleich 2 ist, wobei i eine ganze Zahl im Bereich von 1 bis n ist,
o wobei die Schicht C1 zwischen der Schicht A und der Schicht C2 angeordnet ist,
o wobei die Schicht Cn zwischen der Schicht B und der Schicht Cn-1 angeordnet ist,
o wobei die Schicht Ci zwischen der Schicht Ci-1 und der Schicht Ci+1 für die Werte von i, die von 2 bis n-1 gehen, wenn n größer als 2 ist, angeordnet ist,
wobei
die Schicht A aus einer Dienkautschukzusammensetzung besteht,
die Schicht B aus einer Dienkautschukzusammensetzung besteht, die ein Dienelastomer B umfasst, das einen Masseanteil Dieneinheit von mehr als 50 % aufweist,
die n Schichten Ci für i von 1 bis n jeweils aus einer Dienkautschukzusammensetzung bestehen,
die Schicht C1 ein Dienelastomer E umfasst, das Ethyleneinheiten und Dieneinheiten umfasst, wobei die Dieneinheiten mehr als 10 Masse-% der Monomereinheiten des Dienelastomers E ausmachen,
die Schicht Cn von 50 bis mindestens 100 pce eines Dienelastomers N umfasst, das einen Massenanteil Dieneinheit von mehr als 50 % aufweist,
wobei der Anteil an Dienelastomer N, ausgedrückt als pce, in der Schicht Cn höher ist als in der Schicht C1,
wobei der Anteil an Dienelastomer E, ausgedrückt als pce, in der Schicht C1 höher ist als in der Schicht Cn,
für n größer als 2 die Schichten Ci ein Dienelastomer I umfassen, das ausgewählt ist aus der Gruppe bestehend aus Homopolymeren und Copolymeren von Dien, die mehr als 10 Masse-% Dieneinheit für die Werte von i im Bereich von 2 bis n-1 ausmachen.

2. Elastomerlaminat nach Anspruch 1, wobei
das Dienelastomer N ein Polyisopren mit hohem cis-Gehalt mit einem 1,4-cis-Bindungsgrad von über 90 %, vorzugsweise ein Naturkautschuk, ist.

3. Elastomerlaminat nach einem der Ansprüche 1 bis 2, wobei
das Dienelastomer I das Dienelastomer E, das Dienelastomer N oder eine Mischung davon ist.

4. Elastomerlaminat nach Anspruch 3, wobei
der Anteil an Dienelastomer E, ausgedrückt als pce, in der Schicht Ci+1 für mindestens einen der Werte von i im Bereich von 2 bis n-1, wobei n größer als 2 ist, geringer ist als in der Schicht Ci.

5. Elastomerlaminat nach einem der Ansprüche 3 bis 4, wobei
der Anteil an Dienelastomer E, ausgedrückt als pce, in der Schicht Ci+1 für jeden Wert von i im Bereich von 2 bis n-1, wobei n größer als 2 ist, geringer ist als in der Schicht Ci.

6. Elastomerlaminat nach einem der Ansprüche 3 bis 5, wobei
der Anteil an Dienelastomer N, ausgedrückt als pce, in der Schicht Ci für jeden Wert von i im Bereich von 2 bis n-1, wobei n größer als 2 ist, geringer ist als in der Schicht Ci+1.

7. Elastomerlaminat nach einem der Ansprüche 3 bis 6, wobei
der Anteil an Dienelastomer N, ausgedrückt als pce, in der Schicht Ci für jeden Wert von i im Bereich von 2 bis n-1, wobei n größer als 2 ist, geringer ist als in der Schicht Ci+1.

8. Elastomerlaminat nach einem der Ansprüche 1 bis 7, wobei
eine beliebige der Schichten Ci, vorzugsweise alle, mehr als 90 pce einer Elastomermischung, die aus dem Elastomer N und dem Elastomer E besteht, vorzugsweise 100 pce von dieser Mischung für i im Bereich von 2 bis n-1, wobei n größer als 2 ist, enthält.

9. Elastomerlaminat nach einem der Ansprüche 1 bis 8, wobei
die Schicht Cn ein anderes Elastomer umfasst, das vorzugsweise ausgewählt ist aus der Gruppe der Dienelastomere, die einen Massenanteil Dieneinheit von mehr als 10 % aufweisen, vorzugsweise das Dienelastomer E.

10. Elastomerlaminat nach einem der Ansprüche 1 bis 9, wobei
die Schicht Cn mehr als 90 pce einer Elastomermischung, die aus dem Dienelastomer N und dem Dienelastomer E besteht, vorzugsweise 100 pce von dieser Mischung enthält.

11. Elastomerlaminat nach einem der Ansprüche 1 bis 10, wobei
die Schicht C1 ein anderes Dioenelastomer umfasst, das vorzugsweise einen Massenanteil Dieneinheit von mehr als 50 % aufweist, vorzugsweise das Dienelastomer N.

12. Elastomerlaminat nach einem der Ansprüche 1 bis 11, wobei
der Anteil an Dienelastomer E in der Schicht C1 von 50 bis 100 pce, vorzugsweise zwischen 50 und 100 pce beträgt.

13. Elastomerlaminat nach einem der Ansprüche 1 bis 12, wobei
die Schicht C1 mehr als 90 pce einer Elastomermischung, die aus dem Dienelastomer N und dem Dienelastomer E besteht, vorzugsweise 100 pce von dieser Mischung enthält.

14. Elastomerlaminat nach einem der Ansprüche 1 bis 13, wobei
der Anteil an Dienelastomer N, ausgedrückt als pce, in der Schicht Cn von 50 und 90 pce beträgt.

15. Elastomerlaminat nach einem der Ansprüche 1 bis 14, wobei
das Dienelastomer E zwischen 10 und 40 Masse-%, vorzugsweise zwischen 10 und 20 Masse-% Dieneinheit enthält.

16. Elastomerlaminat nach einem der Ansprüche 1 bis 15, wobei
das Dienelastomer E ein Terpolymer aus Ethylen, einem α-Olefin und einem nichtkonjugierten Dien, vorzugsweise ein EPDM ist.

17. Elastomerlaminat nach einem der Ansprüche 1 bis 16, wobei
der Anteil an Dienelastomer B in der Dienkautschukzusammensetzung der Schicht B mindestens 95 pce, vorzugsweise gleich 100 pce beträgt.

18. Elastomerlaminat nach einem der Ansprüche 1 bis 17, wobei
das Dienelastomer B ein Polyisopren mit hohem cis-Gehalt mit einem 1,4-cis-Bindungsgrad von über 90 %, vorzugsweise ein Naturkautschuk, ist.

19. Elastomerlaminat nach einem der Ansprüche 1 bis 18, wobei
die Schicht A ein Dienelastomer A Terpolymer aus Ethylen, einem α-Olefin und einem nichtkonjugierten Dien, das einen Anteil Dieneinheit von weniger als 10 Masse-% aufweist, vorzugsweise ein EPDM, umfasst.

20. Elastomerlaminat nach einem der Ansprüche 1 bis 19, wobei
die Schicht A eine elastomere Matrix A enthält, die einen Massenanteil Dieneinheit von weniger als 10 % aufweist.

21. Elastomerlaminat nach einem der Ansprüche 1 bis 20, wobei
der Anteil an Dienelastomer A in der Schicht A mindestens 95 pce, vorzugsweise gleich 100 pce beträgt.

22. Elastomerlaminat nach einem der Ansprüche 1 bis 21, wobei
eine der Schichten A, B und Ci, vorzugsweise alle, einen verstärkenden Füllstoff, vorzugsweise Ruß, umfasst, wobei i von 1 bis n variiert.

23. Elastomerlaminat nach einem der Ansprüche 1 bis 22, wobei
eine der Schichten A, B und Ci, vorzugsweise alle, ein Vernetzungssystem, vorzugsweise ein Vulkanisationssystem, umfasst, wobei i von 1 bis n variiert.

24. Elastomerlaminat nach einem der Ansprüche 1 bis 23, wobei
jede der n Schichten höchstens 20 pce eines Weichmachers, vorzugsweise weniger als 10 pce, enthält.

25. Elastomerlaminat nach einem der Ansprüche 1 bis 24, wobei
eine der n Schichten, vorzugsweise alle, keinen Weichmacher umfasst.

26. Elastomerlaminat nach einem der Ansprüche 1 bis 3 oder 9 bis 25, wobei n gleich 2 ist.

27. Verwendung eines Reifens aus einem Elastomerlaminat, das nach einem der Ansprüche 1 bis 26 definiert ist.

28. Reifen, umfassend eine Lauffläche, zwei Flanken, zwei Wülste, eine Karkassenbewehrung, die die Flanken durchläuft und an den zwei Wülsten verankert ist, und eine Scheitelbewehrung, die in Umfangsrichtung zwischen der Lauffläche und der Karkassenbewehrung angeordnet ist, wobei der Reifen ein Elastomerlaminat nach einem der Ansprüche 1 bis 26 umfasst.

29. Reifen nach Anspruch 28, wobei die Schicht A des Elastomerlaminats einen Teil oder die gesamte Lauffläche des Reifens bildet und die Schicht B des Elastomerlaminats einen Teil oder die gesamte Unterschicht der Lauffläche bildet.

30. Klebendes Laminat, das aus den Schichten C1, Cn und Ci, wie in den Ansprüche 1 bis 26 definiert, besteht, jedoch mit dem Unterschied, dass die Schicht C1 und die Schicht Cn eine einzige Schnittstelle mit einer Schicht, jeweils mit der Schicht C2 und der Schicht Cn-1, für i im Bereich von 2 bis n-1 mit n größer oder gleich 2 aufweisen.

31. Verwendung eines klebenden Laminats, das nach Anspruch 30 definiert ist, um zwei Schichten A' und B' von identischer Zusammensetzung jeweils mit den Schichten A und B, die nach einem der Ansprüche 1 bis 26 definiert sind, zu verkleben, indem die Schicht C1 auf die Schicht A' und die Schicht Cn auf die Schicht B' aufgebracht wird.

## Claims

1. Elastomeric laminate comprising a layer A, a layer B, n layers Ci arranged between the layer A and the layer B, n being an integer greater than or equal to 2, i being an integer ranging from 1 to n,
∘ the layer C1 being arranged between the layer A and the layer C2,
∘ the layer Cn being arranged between the layer B and the layer Cn-1,
∘ the layer Ci being arranged between the layer Ci-1 and the layer Ci+1 for values of i ranging from 2 to n-1 when n is greater than 2,
in which
the layer A consists of a diene rubber composition,
the layer B consists of a diene rubber composition comprising a diene elastomer B having a content by weight of diene units of greater than 50%,
the n layers Ci, for i ranging from 1 to n, each consist of a diene rubber composition,
the layer C1 comprises a diene elastomer E comprising ethylene units and diene units, the diene units representing more than 10% by weight of the monomer units of the diene elastomer E,
the layer Cn comprises from 50 to less than 100 phr of a diene elastomer N having a content by weight of diene units of greater than 50%,
the content, expressed in phr, of diene elastomer N being higher in the layer Cn than in the layer C1,
the content, expressed in phr, of diene elastomer E being higher in the layer C1 than in the layer Cn,
for n greater than 2, the layers Ci comprise a diene elastomer I selected from the group consisting of the diene homopolymers and copolymers having more than 10% by weight of diene units, for values of i ranging from 2 to n-1.

2. Elastomeric laminate according to Claim 1, in which
the diene elastomer N is a polyisoprene with a high cis content, having a degree of 1,4-cis bonding of greater than 90%, preferably a natural rubber.

3. Elastomeric laminate according to either one of Claims 1 and 2, in which
the diene elastomer I is the diene elastomer E, the diene elastomer N or the mixture thereof.

4. Elastomeric laminate according to Claim 3, in which
the content, expressed in phr, of diene elastomer E, is lower in the layer Ci+1 than in the layer Ci for at least one of the values of i ranging from 2 to n-1, with n greater than 2.

5. Elastomeric laminate according to either one of Claims 3 and 4, in which
the content, expressed in phr, of diene elastomer E, is lower in the layer Ci+1 than in the layer Ci for any value of i ranging from 2 to n-1, with n greater than 2.

6. Elastomeric laminate according to any one of Claims 3 to 5, in which the content, expressed in phr, of diene elastomer N, is lower in the layer Ci than in the layer Ci+1 for at least one of the values of i ranging from 2 to n-1, with n greater than 2.

7. Elastomeric laminate according to any one of Claims 3 to 6, in which the content, expressed in phr, of diene elastomer N, is lower in the layer Ci than in the layer Ci+1 for any value of i ranging from 2 to n-1, with n greater than 2.

8. Elastomeric laminate according to any one of Claims 1 to 7, in which any one, preferably all, of the layers Ci contains more than 90 phr of a mixture of elastomers consisting of the elastomer N and the elastomer E, preferably 100 phr of this mixture, for i ranging from 2 to n-1, with n greater than 2.

9. Elastomeric laminate according to any one of Claims 1 to 8, in which the layer Cn comprises another elastomer preferentially selected from the group consisting of diene elastomers having a content by weight of diene units greater than 10%, preferably the diene elastomer E.

10. Elastomeric laminate according to any one of Claims 1 to 9, in which the layer Cn contains more than 90 phr of a mixture of elastomers consisting of the diene elastomer N and the diene elastomer E, preferably 100 phr of this mixture.

11. Elastomeric laminate according to any one of Claims 1 to 10, in which the layer C1 comprises another diene elastomer preferably having a content by weight of diene units greater than 50%, preferably the diene elastomer N.

12. Elastomeric laminate according to any one of Claims 1 to 11, in which the content of diene elastomer E is from 50 to 100 phr, preferably between 50 and 100 phr, in the layer C1.

13. Elastomeric laminate according to any one of Claims 1 to 12, in which the layer C1 contains more than 90 phr of a mixture of elastomers consisting of the diene elastomer N and the diene elastomer E, preferably 100 phr of this mixture.

14. Elastomeric laminate according to any one of Claims 1 to 13, in which the content, expressed in phr, of diene elastomer N is from 50 to 90 phr in the layer Cn.

15. Elastomeric laminate according to any one of Claims 1 to 14, in which the diene elastomer E contains between 10 and 40%, preferably between 10 and 20% by weight of diene units.

16. Elastomeric laminate according to any one of Claims 1 to 15, in which the diene elastomer E is a terpolymer of ethylene, of an α-olefin and of a non-conjugated diene, preferably an EPDM.

17. Elastomeric laminate according to any one of Claims 1 to 16, in which the content of diene elastomer B in the diene rubber composition of the layer B is at least 95 phr, preferably equal to 100 phr.

18. Elastomeric laminate according to any one of Claims 1 to 17, in which the diene elastomer B is a polyisoprene with a high cis content, having a degree of 1,4-cis bonding of greater than 90%, preferably a natural rubber.

19. Elastomeric laminate according to any one of Claims 1 to 18, in which the layer A comprises a diene elastomer A which is a terpolymer of ethylene, of an α-olefin and of a non-conjugated diene having a content of diene units of less than 10% by weight, preferably an EPDM.

20. Elastomeric laminate according to any one of Claims 1 to 19, in which the layer A contains an elastomer matrix A having a content by weight of diene units of less than 10%.

21. Elastomeric laminate according to any one of Claims 1 to 20, in which the content of diene elastomer A in the layer A is at least 95 phr, preferentially equal to 100 phr.

22. Elastomeric laminate according to any one of Claims 1 to 21, in which any one, preferably all, of the layers A, B and Ci comprises a reinforcing filler, preferably a carbon black, i varying from 1 to n.

23. Elastomeric laminate according to any one of Claims 1 to 22, in which any one, preferably all, of the layers A, B and Ci comprises a crosslinking system, preferably a vulcanization system, i varying from 1 to n.

24. Elastomeric laminate according to any one of Claims 1 to 23, in which each of the n layers contains at most 20 phr of a plasticizer, preferably less than 10 phr.

25. Elastomeric laminate according to any one of Claims 1 to 24, in which any one, preferably all, of the n layers does not contain plasticizer.

26. Elastomeric laminate according to any one of Claims 1 to 3 or 9 to 25, in which n is equal to 2.

27. Use, in a tyre, of an elastomeric laminate defined according to any one of Claims 1 to 26.

28. Tyre comprising a tread, two sidewalls, two beads, a carcass reinforcement passing into the two sidewalls and anchored to the two beads, and a crown reinforcement arranged circumferentially between the tread and the carcass reinforcement, which tyre comprises an elastomeric laminate according to any one of Claims 1 to 26.

29. Tyre according to Claim 28, in which the layer A of the elastomeric laminate constitutes a portion or all of the tyre tread and the layer B of the elastomeric laminate constitutes a portion or all of a tread underlayer.

30. Adhesive laminate which consists of the layers C1, Cn and Ci as defined in Claims 1 to 26, apart from the fact that the layer C1 and the layer Cn have a single interface with one layer, respectively with the layer C2 and the layer Cn-1, for i ranging from 2 to n-1 with n greater than or equal to 2.

31. Use of an adhesive laminate defined according to Claim 30 for adhesively bonding two layers A' and B' of identical composition, respectively, to the layers A and B defined according to any one of Claims 1 to 26, by applying the layer C1 to the layer A' and the layer Cn to the layer B'.
